# EUROPÄISCHE PATENTSCHRIFT

(11) **EP 2 053 345 B1**
(45) Veröffentlichungstag und Bekanntmachung des Hinweises auf die Patenterteilung: **02.06.2010**
(21) Anmeldenummer: 07119171.2
(22) Anmeldetag: 24.10.2007
(51) Int. Cl.: G01B 5/00

(54) **Messvorrichtung für schwere Werkstücke**
Measuring device for heavy workpieces
Dispositif de mesure pour pièces à usiner lourdes

(43) Veröffentlichungstag der Anmeldung: 29.04.2009
(73) Patentinhaber: Klingelnberg AG, 8023 Zürich (CH)
(72) Erfinder: Mikoleizig, Günter, 42499, Hückeswagen (DE)
(74) Vertreter: OK pat AG

(56) Entgegenhaltungen:
- DE-U1- 9 007 815
- GB-A- 2 008 764
- US-A- 2 811 781

## Beschreibung

Die Erfindung betrifft eine Messvorrichtung für das Vermessen schwerer Werkstücke.

### HINTERGRUND DER ERFINDUNG

Es gibt Messvorrichtungen, um mittels Messtastern die Geometrie, Eigenschaften und andere Aspekte von Werkstücken zu (ver-)messen. Derartige Messvorrichtungen werden häufig zum Messen von Zahnrädern und ähnlichen Werkstücken eingesetzt.

Bei derartigen Messvorrichtungen kommt es darauf an, eine hohe Messgenauigkeit zu garantieren. Entsprechend wird ein grosser Aufwand betrieben, um alle wesentlichen Komponenten solcher Messvorrichtungen so auszulegen, dass die Messfehler gering sind.

Aus der Patentschrift US 2,811,781 ist eine Messvorrichtung bekannt, die z.B. für das Vermessen verzahnter Werkstücke eingesetzt werden kann. Eine Stützwelle eines Drehtischs dieser Vorrichtung wird durch radiale und axiale Schublager gelagert. Diesem US-Patent ist zu entnehmen, dass sämtliche Kräfte des zu vermessenden Werkstücks vor allem in die axialen Schublager eingeleitet werden. Speziell beim Aufsetzen des Werkstücks kann es zu Beschädigungen am axialen Schublager kommen. Daher schlägt US 2,811,781 eine Lösung vor, die dafür sorgt, dass die Stützwelle vom axialen Schublager abgehoben wird, während das Werkstück auf den Drehtisch aufgesetzt wird. Das Abheben der Stützwelle wird durch eine koaxial angeordnete Buchse bewirkt, die so ausgeführt ist, dass eine kleine Rotationsbewegung der Drehtischs samt Stützwelle zu einem Anheben derselben führt.

Um beliebige Punkte im dreidimensionalen Raum mit dem Messtaster erreichen zu können, sollte die Messvorrichtung drei oder mehr numerisch (CNC) angesteuerte Achsen aufweisen.

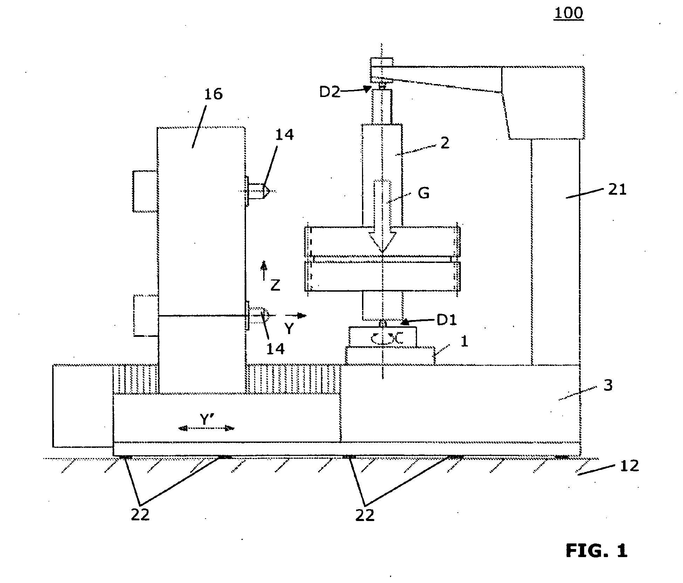

Speziell bei großen, sperrigen und sehr schweren Werkstücken ergeben sich verschiedene Probleme, die es nicht erlauben vorhandene Messvorrichtungen, wie zum Beispiel die in Fig. 1 gezeigte vorbekannte Vorrichtung, entsprechend zu skalieren. Besonders problematisch ist das Gewicht der Werkstücke, da es bei herkömmlichen Messvorrichtungen zu einer Verformung des Maschinenbetts oder Messtisches kommen kann, wenn dieses z.B. keine ausreichende Steifigkeit hat. Diese Verformung führt zu Messungenauigkeiten, die nicht toleriert werden können.

Aus der deutschen Patentschrift DE 10 2005 058 504 B3 ist ein Portalmessgerät bekannt, das einen in allen drei Raumrichtungen eines kartesischen Koordinatensystems bewegbaren Messtaster aufweist. Das zu vermessende Objekt ruht auf einem Tisch, der mittels mehrerer spezieller Füße auf einem Fundament oder Sockel sitzt. Der Messtaster wird mittels eines portalförmigen Rahmens über das Objekt und entlang des Tisches bewegt. Durch ein vertikales Absenken des Messtasters kann das Objekt von oben abgetastet werden. Die genannte Patentschrift bietet eine Lösung, die es erlaubt den Gewichtseinfluss auf die Positions- und Messgenauigkeit zu reduzieren.

Es ist aber ein Nachteil dieser Anordnung, dass durch die lichte Höhe des portalförmigen Rahmens gleichzeitig auch die maximale Höhe und durch die lichte Breite auch die Breite des zu messenden Objekts begrenzt sind. Außerdem gibt es zahlreiche Werkstücke, die sich aufgrund ihrer Geometrie nicht oder nur begrenzt auf einem solchen Portalmessgerät in horizontaler Lage messen lassen. Außerdem hat das beschriebene Portalmessgerät den Nachteil, dass die vertikale Verstellbarkeit, die als ein wesentliches Merkmal propagiert wird, bei Werkstücken mit großem Gewicht nicht mehr oder nur noch eingeschränkt funktioniert.

Es wird als ein weiterer Nachteil dieser Lösung angesehen, dass der Verfahraufwand bzw. Verfahrweg des Messtasters relativ gross und damit die Messdauer lang ist, wenn rotationssymmetrische Werkstücke (wie z.B. Zahnräder) zu vermessen sind.

Es ist daher eine Aufgabe der Erfindung, eine Messvorrichtung und eine neuartige Werkstückaufnahme bereit zu stellen, die es ermöglichen grosse und vor allem schwere Werkstücke schnell und zuverlässig zu messen, ohne dass das Gewicht des Werkstücks einen negativen Einfluss auf die Messgenauigkeit hat.

Ausserdem soll die Vorrichtung günstig in der Herstellung sein und trotzdem hochgenau messen können.

Entsprechend wird gemäß Erfindung eine Messvorrichtung zum Messen eines Werkstücks gemäss Anspruch 1 bereit gestellt.

Vorteilhafte Ausgestaltungen der erfindungsgemässen Messvorrichtung, respektive der entsprechenden Werkstückaufnahme, bilden die Gegenstände der abhängigen Ansprüche.

### ZEICHNUNGEN

Ausführungsbeispiele der Erfindung werden im Folgenden unter Bezugnahme auf die Zeichnungen näher beschrieben. Es zeigen:
- **FIG. 1**: eine schematische Darstellung einer bekannten Messvorrichtung;
- **FIG. 2**: eine schematische Darstellung einer Werkstückaufnahme;
- **FIG. 3**: eine schematische Darstellung der erfindungsgemäßen Werkstückaufnahme;
- **FIG. 4**: eine schematische Darstellung einer Messvorrichtung mit der Werkstückaufnahme nach Fig. 2.

### DETAILLIERTE BESCHREIBUNG

Im Zusammenhang mit der vorliegenden Beschreibung werden Begriffe verwendet, die auch in einschlägigen Normen Verwendung finden. Es sei jedoch angemerkt, dass die Verwendung dieser Begriffe lediglich dem besseren Verständnis dienen soll. Der erfinderische Gedanke und der Schutzumfang der Patentansprüche sollen durch die spezifische Wahl der Begriffe nicht in der Auslegung eingeschränkt werden. Die Erfindung lässt sich ohne Weiteres auf andere Begriffssysteme und/oder Fachgebiete übertragen. In anderen Fachgebieten sind die Begriffe sinngemäss anzuwenden.

Es geht, wie eingangs angedeutet, um das Messen von großen und schweren Werkstücken. Insbesondere geht es um das Messen von Drehwerkstücken (z.B. Wellen) oder Zahnräder. Die erfindungsgemäße Vorrichtung ist insbesondere geeignet für großmodulige Zahnräder, wie sie im Schiffsbau, in Kraftwerken und Industrieanlagen zum Einsatz kommen. Die im Folgenden beschriebenen Beispiele konzentrieren sich daher auf das Messen von Zahnrädern, wobei dies nicht als einschränkend für den Schutzumfang zu verstehen ist.

Der Begriff "Messen" wird verwendet, um das Vermessen oder Ermitteln der Geometrie, der Lage oder anderer Aspekte eines Werkstücks zu beschreiben. Dieser Begriff soll ganz allgemein jede Art des Erfassens von Messgrößen mittels eines Tast-, Abtast- oder Scannkopfes umfassen, wobei es sich um z.B. mechanisch, optisch, kapazitiv und/oder induktiv arbeitende Taster handeln kann.

Bevor Details der Erfindung beschrieben werden, werden anhand der Fig. 1 die wesentlichen Elemente einer vorbekannten Messvorrichtung 100 erläutert. Ein Teil dieser Elemente kann auch bei der erfindungsgemässen Vorrichtung 100 zum Einsatz kommen.

Die Messvorrichtung 100 umfasst ein Maschinenbett, das im Folgenden allgemeiner als Grundplatte 3 bezeichnet wird. Bei der Grundplatte 3 handelt es sich um eine Art Trägerelement oder Rahmen (z.B. in Form eines Gussteils), das die wesentlichen Teile der Messvorrichtung 100 trägt. An der Grundplatte 3 kann ein vertikaler Messturm 16 mit einem Messtaster 14 vorgesehen sein (es können aber auch zwei Messtaster 14 vorgesehen sein). Der Messturm 16 kann z.B. in Y' Richtung entlang der Grundplatte 3 bewegt werden, um so den Abstand zu einem Werkstück 2 zu reduzieren, das zu messen ist. Der Messtaster 14 (in Fig. 1 ist dieser Messtaster 14 in 2 Positionen dargestellt) kann auch individuell zugestellt werden, indem er parallel zur Y Richtung (die parallel zur Y' Richtung verläuft) ausgefahren oder zurückgezogen wird.

Das Werkstück 2, im gezeigten Beispiel ein Zylinderrad mit Welle, ist senkrecht auf einem drehbaren Tisch, Drehtisch 1 genannt, gelagert. Vorzugsweise kommen ein unterer Spanndorn D1 und ein oberer Spanndorn D2 (auch Gegenspitze genannt) zum Einsatz, um das Werkstück 2 einspannen zu können. Es kann ein entsprechender seitlicher Arm 21 vorgesehen sein, um das Einspannen des Werkstücks 2 zu ermöglichen. Der Abstand zwischen den Spanndomen D1 und D2 kann eingestellt werden. Die Grundplatte 3 samt aller Aufbauten ruht mit mehreren Füssen 22 auf einem Fundament 12.

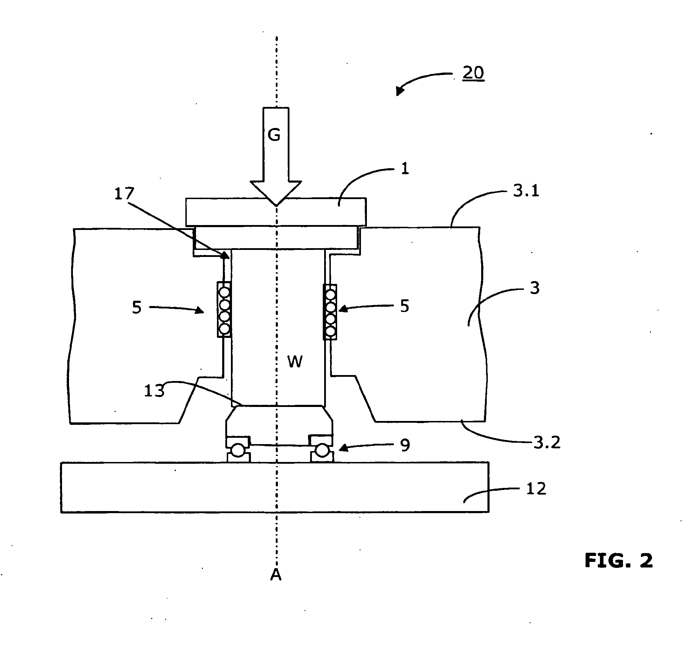

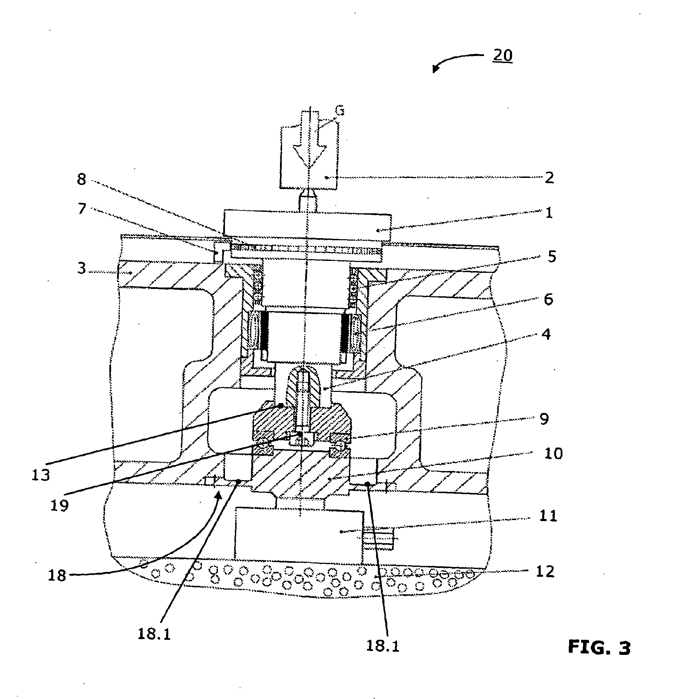

In Fig. 2 ist nun in einer stark schematisierten Darstellung ein Beispiel, das nicht die Erfindung darstellt, gezeigt. Zu sehen ist eine vereinfachte Schnittansicht durch eine neuartige Grundplatte 3, die eine vertikale Durchgangsöffnung 17 aufweist. Diese Durchgangsöffnung 17 erstreckt sich von der Oberseite 3.1 zur Unterseite 3.2 der Grundplatte 3. Vorzugsweise handelt es sich um eine rotationssymmetrische Durchgangsöffnung 17 (rotationssymmetrisch in Bezug auf die Rotationsachse A). In diese Durchgangsöffnung 17 eingesetzt ist ein Drehteller 1 (auch als Drehtisch bezeichnet) mit einem Unterbau, der im Folgenden beschrieben wird. Der Unterbau umfasst eine Welle W, die an dem Drehtisch 1 befestigt oder ein integraler Bestandteil des Drehtisches 1 ist. Diese Welle W wird in radialer Richtung durch ein Radiallager 5 gehalten. Die Welle W verläuft mittig durch das Radiallager 5 hindurch. Das untere Stirnende 13 der Welle W sitzt auf einem Axiallager 9 oder mündet in ein Axiallager 9. Dieses Axiallager 9 ist so dimensioniert und angeordnet, dass in axialer Richtung wirkende Kräfte (z.B. das Gewicht G des Werkstücks 2) von dem Axiallager 9 aufgenommen werden. Unterseitig ist das Axiallager 9 entsprechend in Bezug auf das Fundament 12 abgestützt. Diese Abstützung erfolgt so, dass entweder die gesamte Gewichtskraft (dies ist bei der in Fig. 2 gezeigten Ausführungsform der Fall) oder ein Grossteil der Gewichtskraft (dies ist bei der in Fig. 3 gezeigten erfindungsgemässen Ausführungsform der Fall) in das Fundament 12 eingeleitet wird. In vertikaler Richtung (d.h. parallel zu der Rotationsachse A) gesehen, kann der Drehtisch 1 zusammen mit der Welle W leicht verschoben oder verlagert werden. D.h. die Welle W des Drehtisches 1 ist vertikal frei schwimmend gelagert.

Bei der gezeigten Ausführungsform gibt es keine mechanische Verbindung (daher die Bezeichnung vertikal frei schwimmend) zwischen dem Drehtisch 1 mit Unterbau und der Grundplatte 3. Lediglich die Reibungskräfte, die im Bereich des Radiallagers 5 auf die Welle W wirken, sorgen für eine geringe mechanische Kopplung der beiden Bereiche. Mit anderen Worten ausgedrückt, kann der Drehtisch 1 mit Unterbau nahezu unabhängig von der Grundplatte 3 nach oben oder unten bewegt werden, bzw. die Grundplatte 3 kann nach oben oder unten bewegt werden, ohne den Drehtisch 1 mit Unterbau mitzubewegen.

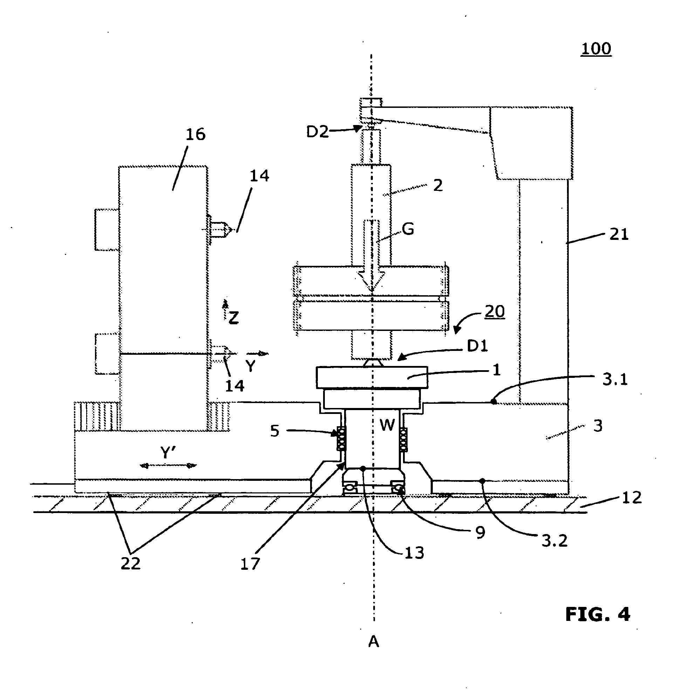

Um nun die Messvorrichtung 100 als Gesamtes in seiner Lage zu definieren, kann die Grundplatte 3 z.B. mit entsprechenden Füssen 22 oder Blöcken auf dem Fundament 12 ruhen, wie z.B. in Fig. 4 gezeigt.

Wenn nun z.B. ein schweres Werkstück 2 auf den Drehtisch 1 aufgespannt wird (z.B. zwischen zwei Spanndornen D1 und D2, wie in Fig. 1 und Fig. 4 gezeigt), so wird nahezu die gesamte Gewichtskraft G des Werkstücks 2 vom Drehtisch 1 über die Welle W und das Axiallager 9 in das Fundament 12 geleitet. Durch die schwimmende Lagerung kommt es nicht zu einer Verbiegung/Verformung oder sonstigen Beeinflussung der Grundplatte 3. D.h. es kommt auch nicht zu einem Versatz oder einer anderen Beeinflussung des sehr empfindlichen 3-D Messaufbaus (z.B. des Messturmes 16 mit einem Messtaster 14 oder mit zwei Messtastern).

Eine Ausführungsform der Erfindung ist in Fig. 3 gezeigt. Im Unterschied zu den Figuren 2 und 4, ist hier der Drehtisch 1 mit Unterbau schwebend gelagert. Diese schwebende Lagerung wird erfindungsgemäss, indem eine entsprechende flexible Lagerung 18 vorgesehen wird. Diese flexible Lagerung 18 ist so ausgeführt, dass Drehtisch 1 mit Unterbau komplett von der Grundplatte 3 getragen oder in dieser gehalten wird. Wird nun ein grosses Gewicht G auf den Drehtisch 1 aufgesetzt oder aufgespannt, so erlaubt die flexible Lagerung 18 ein leichtes Absacken oder Nachuntenverschieben der Welle W samt des an deren Stirnende 13 befindlichen Axiallagers 9.

Um dies zu ermöglichen, sind folgende Bestandteile der Werkstückaufnahme vorgesehen (von oben nach unten betrachtet). Es ist ein Drehtisch 1 vorgesehen, wie in Fig. 2. Unterhalb dieses Drehtisches 1 befindet sich eine Welle W, die an dem Drehtisch 1 befestigt oder ein integraler Bestandteil des Drehtisches 1 ist. Diese Welle W wird in radialer Richtung durch ein Radiallager 5 gehalten. Die Welle W verläuft mittig durch das Radiallager 5 hindurch. Das untere Stirnende 13 der Welle W sitzt auf einem Axiallager 9 oder mündet in ein Axiallager 9. Dieses Axiallager 9 ist so dimensioniert und angeordnet, dass in axialer Richtung wirkende Kräfte (z.B. das Gewicht G des Werkstücks 2) von dem Axiallager 9 aufgenommen werden. Unterseitig ist das Axiallager 9 entsprechend von einem (Aufnahme-)Flansch 10 aufgenommen. Der Flansch 10 wiederum stützt sich ab auf dem Fundament 12 oder auf einem sogenannten Fundamentschuh 11, wie in Fig. 3 gezeigt. Im ersten Fall überträgt der Flansch 11 direkt die Gewichtskräfte auf das Fundament 12 und im zweiten Fall werden die Gewichtskräfte indirekt über den Fundamentschuh 11 auf das Fundament 12 übertragen.

Der Flansch 10 ist so konstruktiv ausgeführt, dass er als flexible Lagerung 18 dient. Dabei ist in Axialrichtung eine gewisse Flexibilität vorhanden. Diese Flexibilität ergibt sich bei der gezeigten Ausführungsform durch die dünnen und flexiblen (membranartigen) Stege 18.1. Durch diese Art der flexiblen Lagerung 18, die hier auch als schwebende Lagerung bezeichnet wird, wird sicher gestellt, dass ein Grossteil der Gewichtskräfte G direkt oder indirekt in das Fundament 12 eingeleitet werden. Nur ein vernachlässigbar kleiner Anteil der Gewichtskraft G wird über die Stege 18.1 in den unteren Bereich der Grundplatte 3 eingeleitet. Diese Kräfte sind jedoch so klein, dass es nicht zu einer Verbiegung oder sonstigen Beeinflussung der Grundplatte 3 oder des 3-D Messaufbaus (Messvorrichtung 100) kommt.

Im Folgenden sind weitere vorteilhafte Details der in Fig. 3 gezeigten Ausführungsform beschrieben. Vorzugsweise ist ein Motor 6 vorgesehen, um den Drehtisch 1 samt Werkstück 2 um die Rotationsachse A drehen zu können. Im gezeigten Beispiel handelt es sich um einen Servomotor, der konzentrisch auf der Welle W bzw. in einem Aufnahmeflansch der Radiallagerung 5 angeordnet ist. Gegebenenfalls kann ein Winkelmesssystem 7, 8 zur Ansteuerung der entsprechenden CNC-Steuerung der Messvorrichtung 100 und zur genauen Positionserfassung eingesetzt werden. Vorzugsweise befindet sich dieses Winkelmesssystem 7, 8 unmittelbar am oder unterhalb des Drehtisches 1. Das Winkelmesssystem 7, 8 kann z.B. einen optischen Sensor 7 umfassen, der an der Grundplatte 3 befestigt ist. Gegenüber des Sensors 7 befinden sich an dem Drehtisch 1 optisch abtastbare Markierungen 8. Wenn der Drehtisch 1 gedreht wird, erfasst der Sensor 7 diese Drehung.

Vorzugsweise ist das Axiallager 9 mittels einer Schraubverbindung (aus einer Schraube 19 mit einem Gewindeloch) mit dem unteren Stirnende 13 der Welle W verschraubt. Die Schraube 19 ist in einem Schraubenloch/Gewindeloch im unteren Endbereich 4 der Welle W befestigt.

Der erwähnte Fundamentschuh 11 kann an oder unterhalb der Grundplatte 3 sitzen und ruht flächig auf dem Fundament 12.

Eine erfindungsgemässe Werkstückaufnahme 20 zum Einbau in eine Messvorrichtung 100, z.B. einer Messvorrichtung 100 nach Fig. 4, umfasst mindestens einen Drehtisch 1 mit einer vertikalen Welle W, die sich im eingebauten Zustand der Werkstückaufnahme 20 unterhalb des Drehtischs 1 befindet. Der Drehtisch 1 weist ein Radiallager 5 auf, durch das die Welle W zentral (mittig) hindurch tritt. Der Drehtisch 1 umfasst ein Axiallager 9, das stirnseitig unterhalb eines von dem Drehtisch 1 beabstandeten unteren Stirnendes 13 der Welle W angeordnet ist. Das Radiallager 5 ist zum Einbau in einen oberen Bereich eines vertikalen Durchgangsloches 17 und das Axiallager 9 zum Einbau in einen unteren Endbereich des vertikalen Durchgangsloches 17 ausgelegt. Das Durchgangsloch 17 ist im Maschinenbett (Grundplatte 3) der Messvorrichtung 100 vorgesehen. Das Axiallager 9 sitzt so in dem unteren Endbereich des vertikalen Durchgangsloches 17, dass bei vertikaler Gewichtsbeanspruchung durch das Gewicht G des Werkstücks 2 die Gewichtskraft G in ein Fundament 12 unterhalb der Werkstückaufnahme 20 geleitet wird.

In Fig. 4 ist eine schematische Darstellung einer nicht-erfindungsgemässen Messvorrichtung 100 mit einer Werkstückaufnahme 20 nach Fig. 2. Es kann sich z.B. um ein vollautomatisches CNC-gesteuertes Verzahnungsmesszentrum 100 handeln. Die gezeigte Messvorrichtung 100 ähnelt der Vorrichtung 100, die bereits im Zusammenhang mit Fig. 1 beschrieben wurde. Im Folgenden werden daher lediglich die erfindungswesentlichen Details dieser Ausführungsform beschrieben.

Bei der in Fig. 4 gezeigten Darstellung handelt es sich um eine schematische Darstellung bei welcher ein Teil der Elemente in einem Teilschnitt dargestellt sind. Wie im Zusammenhang mit Fig. 2 beschrieben, sitzt die Werkstückaufnahme 20, sprich der Drehtisch 1 mit dem Unterbau aus Welle W, Radiallager 5 und Axiallager 9, in einer Durchgangsöffnung 17 der Grundplatte 3, bzw. des Maschinenbetts. Die Grundplatte 3 ruht auf mehreren Füssen 22 oder Blöcken. Unterseitig lagert das Axiallager 9 direkt (wie in Fig. 4 gezeigt) oder indirekt (siehe z.B. Fig. 3) auf dem Fundament 12.

Das beschriebene Verfahren eignet sich ganz besonders für das Messen von großmoduligen Zahnrädern, wie Stirnrädern, Kegelradritzeln und/oder Tellerrädern (vorzugsweise mit einem Modul größer als 12). Erfindungsgemäße Messzentren 100 sind besonders geeignet zum Prüfen von großen und schweren Stirnradverzahnungen sowie, Schnecken und Schneckenrädern, Kegelrädern und allg. Maß-, Form- und Lageabweichungen an rotationssymmetrischen Werkstücken und auch zur Rotormessung.

Die Vorrichtung 100 hat den Vorteil, dass beim Messen eines grossmoduligen Zahnrades kein großer Aufwand beim vorbereitenden Einrichten (Einspannen) oder beim Korrigieren oder Ausgleichen von Messungenauigkeiten erforderlich ist, die sich bei konventionellen Messvorrichtungen ergeben würden, wenn man schwere Werkstücke vermisst. Während dieser Zeit würde eine teuere Messvorrichtung still stehen, was aus finanzieller Sicht nachteilig ist.

Zur Aufnahme der hohen Werkstückgewichte G ist die Werkstuckaufnahme 20 besonders tragfähig und mit großen Reserven ausgelegt. Das zulässige Prüfgewicht kann deutlich über 1000 kg liegen. Je nach Ausgestaltung der Vorrichtung 100 können sogar Werkstückgewichte G von mehreren Tonnen (z.B. mehr als 10 Tonnen) gemessen werden.

## Patentansprüche

1. Messvorrichtung (100) zum Messen eines Werkstücks (2), mit
- einem Drehtisch (1) zum Aufnehmen des Werkstücks (2), der eine vertikale Welle (W) umfasst, die sich unterhalb des Drehtischs (1) befindet,
- einer Grundplatte (3) mit einer Drehtlichlagerung, und
- wobei die Drehtischlagerung zum Lagern der vertikalen Welle (W) in der Grundplatte (3) ein Radiallager (5) und ein Axiallager (9) umfasst,
**dadurch gekennzeichnet, dass**
- die Grundplatte (3) ein vertikales Durchgangsloch (17) aufweist, das sich von einer Oberseite (3.1) der Grundplatte (3) bis zu einer Unterseite (3.2) der Grundplatte (3) erstreckt,
- die Grundplatte (3) auf oder oberhalb eines Fundaments (12) ruht,
- ein von dem Drehtisch (1) beabstandetes unteres Stirnende (13) der Welle (W) so auf dem Axiallager (9) drehbar gelagert ist, dass im Gebrauch das Gewicht (G) des Werkstücks (2) eine vertikale Gewichtsbeanspruchung hervorruft, wenn es auf dem Drehtisch (1) aufgenommen ist, ,
- wobei das Axiallager (9) so in einer flexiblen Lagerung (18) der Grundplatte (3) gehalten ist, das bei der vertikalen Gewichtsbeanspruchung durch das Gewicht (G) des Werkstücks (2) die Gewichtskraft durch den Drehtisch (1), die Welle (W) und das Axiallager (9) hindurch in das Fundament (12) unterhalb der Messvorrichtung (100) eingeleitet wird.

2. Messvorrichtung (100) nach Anspruch 1), **dadurch gekennzeichnet, dass** die flexible Lagerung (18) einen kleinen Anteil der Gewichtskraft in die Grundplatte (3) und den restlichen Anteil der Gewichtskraft in das Fundament (12) einleitet.

3. Messvorrichtung (100) nach Anspruch 1 oder 2, **dadurch gekennzeichnet, dass** ein Flansch (10) mit flexiblen Stegen (18.1) als flexible Lagerung (18) dient.

4. Messvorrichtung (100) nach Anspruch 1 oder 3, **dadurch gekennzeichnet, dass** das Axiallager (9) mittels einer Schraubverbindung (19) mit dem unteren Stirnende (13) der Welle (W) verschraubt ist.

5. Messvorrichtung (100) nach einem der vorhergehenden Ansprüche, **dadurch gekennzeichnet, dass** an oder unterhalb der Grundplatte (3) ein Fundamentschuh (11) vorhanden ist, der flächig auf dem Fundament (12) aufsitzt.

6. Messvorrichtung (100) nach einem der vorhergehenden Ansprüche, **dadurch gekennzeichnet, dass** auf dem Drehtisch (1) ein unterer Einspanndorn (D1) und vertikal beabstandet oberhalb des Drehtischs (1) ein oberer Einspanndom (D2) vorhanden ist, um das Werkstück (2) zwischen diesen Einspanndornen (D1, D2) aufnehmen zu können.

7. Messvorrichtung (100) nach Anspruch 6, **dadurch gekennzeichnet, dass** durch die Einspanndorne (D1, D2) und den Drehtisch (1) eine vertikale Drehachse (A) definiert ist, die zusammenfällt mit einer Rotationsmittelachse der Welle (W) und einer Rotationsmittelachse des Axiallagers (9).

8. Messvorrichtung (100) nach einem der vorhergehenden Ansprüche, **dadurch gekennzeichnet, dass** ein Motor (6) zum Drehen des Drehtischs (1) samt Werkstück (2) vorgesehen ist, wobei es sich vorzugsweise um einen Motor (6) handelt, der sich in der Grundplatte (3) befindet.

9. Messvorrichtung (100) nach Anspruch 8, **dadurch gekennzeichnet, dass** es sich bei dem Motor (6) um einen Servomotor handelt, der koaxial zu der Welle (W) angeordnet ist.

10. Messvorrichtung (100) nach einem der vorhergehenden Ansprüche, **dadurch gekennzeichnet, dass** es sich bei der Messvorrichtung (100) um eine Koordinatenmessvorrichtung zum Messen von gross-moduligen Zahnrädern (2) handelt.

## Claims

1. Measuring device (100) for measuring a workpiece (2), with
- a turntable (1) for receiving the workpiece (2), which comprises a vertical shaft (W), which is located underneath the turntable (1),
- a base plate (3) having a turntable mount, and
- the turntable mount comprising a radial bearing (5) and an axial bearing (9) for mounting the vertical shaft (W) in the base plate (3), **characterized in that**
- the base plate (3) has a vertical through hole (17), which extends from the top side (3.1) of the base plate (3) to a bottom side (3.2) of the base plate (3),
- the base plate (3) rests on or above a foundation (12),
- a lower front end (13) of the shaft (W), which is spaced apart from the turntable (1), is mounted so it is rotatable on the axial bearing (9), so that in use the weight (G) of the workpiece (2) causes a vertical weight load when it is received on the turntable (1),
the axial bearing (9) being retained in a flexible mount (18) of the base plate (3), so that upon the vertical weight load by the weight (G) of the workpiece (2), the weight force is introduced through the turntable (1), the shaft (W), and the axial bearing (9) into the foundation (12) below the measuring device (100).

2. Measuring device (100) according to claim 1, **characterized in that** the flexible mount (18) introduces a small component of the weight force into the base plate (3) and the remaining component of the weight force into the foundation (12).

3. Measuring device (100) according to claim 1 or 2, **characterized in that** a flange (10) having flexible webs (18.1) is used as the flexible mount (18).

4. Measuring device (100) according to claim 1 or 3, **characterized in that** the axial bearing (9) is screwed onto the lower front end (13) of the shaft (W) using a screw connection (19).

5. Measuring device (100) according to one of the preceding claims, **characterized in that** a foundation shoe (11), which is seated flatly on the foundation (12), is provided on or below the base plate (3).

6. Measuring device (100) according to one of the preceding claims, **characterized in that** a lower chucking mandrel (D1) is provided on the turntable (1) and an upper chucking mandrel (D2) is provided vertically spaced above the turntable (1), in order to be able to receive the workpiece (2) between these chucking mandrels (D1, D2).

7. Measuring device (100) according to claim 6, **characterized in that** a vertical rotational axis (A), which is coincident with a rotational central axis of the shaft (W) and a rotational central axis of the axial bearing (9), is defined by the chucking mandrels (D1, D2) and the turntable (1).

8. Measuring device (100) according to one of the preceding claims, **characterized in that** a motor (6) is provided for turning the turntable (1) together with the workpiece (2), it preferably being a motor (6) which is located in the base plate (3).

9. Measuring device (100) according to claim 8, **characterized in that** the motor (6) is a servomotor, which is situated coaxially to the shaft (W).

10. Measuring device (100) according to one of the preceding claims, **characterized in that** the measuring device (100) is a coordinate measuring device for measuring large-module gearwheels (2).

## Revendications

1. Dispositif de mesure (100) destiné à mesurer une pièce (2), comportant :
- un plateau tournant (1) destiné à recevoir la pièce (2), qui comprend un arbre vertical (W) qui se trouve sous le plateau tournant (1),
- une plaque de base (3) comportant une assise de plateau tournant, et
- dans lequel l'assise de plateau tournant comprend, pour loger l'arbre vertical (W) dans la plaque de base (3), un palier radial (5) et un palier axial (9),
**caractérisé en ce que**
- la plaque de base (3) présente un orifice de passage vertical (17) qui s'étend depuis une partie supérieure (3.1) de la plaque de base (3) jusqu'à une partie inférieure (3.2) de la plaque de base (3),
- la plaque de base (3) repose sur ou au-dessus d'un socle (12),
- une extrémité frontale inférieure (13) de l'arbre (W), écartée du plateau tournant (1), est logée de façon à pouvoir tourner sur le palier axial (9) de façon telle qu'à l'usage, la masse (G) de la pièce (2) provoque une sollicitation de masse verticale lorsqu'elle est logée sur le plateau tournant (1),
- dans lequel le palier axial (9) est retenu dans un logement flexible (18) de la plaque de base (3) de façon telle qu'en cas de sollicitation de masse verticale par la masse (G) de la pièce (2), le poids est introduit dans le socle (12) sous le dispositif de mesure (100) en traversant le plateau tournant (1), l'arbre (W) et le palier axial (9).

2. Dispositif de mesure (100) selon la revendication 1, **caractérisé en ce que** le logement flexible (18) introduit une petite partie du poids dans la plaque de base (3) et la partie restante du poids dans le socle (12).

3. Dispositif de mesure (100) selon la revendication 1 ou 2, **caractérisé en ce qu'**une bride (10) avec des barrettes flexibles (18.1) sert de logement flexible (18).

4. Dispositif de mesure (100) selon la revendication 1 ou 3, **caractérisé en ce que** le palier axial (9) est vissé à l'extrémité frontale inférieure (13) de l'arbre (W) par un assemblage à vis (19).

5. Dispositif de mesure (100) selon l'une des revendications précédentes, **caractérisé en ce qu'**au niveau de ou sous la plaque de base (3) se trouve un sabot de socle (11) qui repose à plat sur le socle (12).

6. Dispositif de mesure (100) selon l'une des revendications précédentes, **caractérisé en ce que** sur le plateau tournant (1) se trouvent une broche de fixation inférieure (D1) et une broche de fixation supérieure (2) écartée verticalement au-dessus du plateau tournant (1) pour pouvoir recevoir la pièce (2) entre ces broches de fixation (D1, D2).

7. Dispositif de mesure (100) selon la revendication 6, **caractérisé en ce que** par les broches de fixation (D1, D2) et le plateau tournant (1) est défini un axe de rotation vertical (A) qui coïncide avec un axe central de rotation de l'arbre (W) et un axe central de rotation du palier axial (9).

8. Dispositif de mesure (100) selon l'une des revendications précédentes, **caractérisé en ce qu'**un moteur (6) est prévu pour faire tourner le plateau tournant (1) y compris la pièce (2), et il s'agit alors de préférence d'un moteur (6) qui se trouve dans la plaque de base (3).

9. Dispositif de mesure (100) selon la revendication 8, **caractérisé en ce qu'**il s'agit concernant le moteur (6) d'un servomoteur qui est disposé de façon coaxiale par rapport à l'arbre (W).

10. Dispositif de mesure (100) selon l'une des revendications précédentes, **caractérisé en ce qu'**il s'agit concernant le dispositif de mesure (100) d'un dispositif de mesure de coordonnées destiné à mesurer des roues dentées de grand module (2).
